Europäisches Patentamt

European Patent Office

Office européen des brevets

(19)

(11) Publication number: **0 070 057**
**A2**

(12) # EUROPEAN PATENT APPLICATION

(21) Application number: 82200783.7

(22) Date of filing: 24.06.82

(51) Int. Cl.³: **C 05 F 11/02**

(30) Priority: 09.07.81 GB 8121161

(43) Date of publication of application:
19.01.83 Bulletin 83/3

(84) Designated Contracting States:
AT BE CH DE FR GB IT LI LU NL SE

(71) Applicant: FISONS plc
Fison House Princes Street
Ipswich Suffolk IP1 1QH(GB)

(72) Inventor: Wilson, Francis Neil
66 Chelsworth Avenue
Ipswich Suffolk(GB)

(72) Inventor: Last, Steven Ronald
2 Ennerdale Close
Felixstowe Suffolk(GB)

(74) Representative: Craig, Christopher Bradberry et al,
Fisons plc 12 Derby Road
Loughborough Leicestershire LE11 0BB(GB)

(54) Agglomerated peat particles and a method for their production.

(57) There is described a method for agglomerating peat particles which comprises agitating the particles in the presence of water and calcium and/or magnesium salts which are caused to precipitate *in situ* as a calcium and/or magnesium salt having a water solubility of less than 1g per 100 ml of water at 20°C. The agglomerates may be used as a carrier for fertilizer salts or alternatively as an inert carrier for biocides.

EP 0 070 057 A2

COMPLETE DOCUMENT

AGGLOMERATED PEAT PARTICLES AND A METHOD FOR THEIR
PRODUCTION

The present invention relates to granulated peat and to a method for making it.

In our British Patent Specifications Nos. 1048254, 1070641 and 1357001 we have proposed methods for granulating peat particles in which the particles are tumbled in the presence of water and fertilizer salts. We have now found that peat particles can be granulated by tumbling in the presence of calcium and/or magnesium salts which are deposited, e.g. precipitated, in situ. This is surprising, since our earlier specifications require that the fertilizer salts used be water soluble or be supplied as an aqueous solution. This is in contrast to the present invention where the salts which are precipitated or formed in situ have a water solubility of less than 1g per 100ml of water at $20^{O}C$.

The formation of the salts in situ has a beneficial cementing effect on the agglomerates of peat particles and can lead to less attrition of the agglomerates during subsequent handling.

A further advantage is that the insoluble salts may be free of fertilizer properties and that the agglomerated peat particles can, therefore, be used as an inert carrier. Alternatively, fertilizer salts may be present in lower concentrations e.g. 2% w/w than was previously possible.

0070057

For convenience the term 'precipitated' will be used herein to denote in general the deposition of a solid phase upon a substrate and can be caused by the interaction of two materials to form a less soluble product which is deposited and/or the removal of water from a solution of a material to cause deposition of material from the solution. Furthermore, the precipitation and/or growth of crystals of the solid precipitated can occur or continue after the tumbling of the peat particles has occurred.

Accordingly, the present invention provides a method for agglomerating peat particles which comprises agitating the particles in the presence of water and calcium and/or magnesium salts which are caused to precipitate in situ as a calcium and/or magnesium salt having a water solubility of less than 1g per 100ml of water at $20^{O}C$. Preferably the solubility is less than 0.4g per 100ml of water at $20^{O}C$.

The invention also provides an agglomeration of peat particles containing as binder for the particles a calcium and/or magnesium salt having a solubility of less than 1g per 100ml of water at $20^{O}C$.

The invention can be applied to a wide range of forms of peat, both sedge and sphagnum, but is of special use for sedge peat. It is also of particular use with the fine sphagnum peat particles described in our British Patent Specification No. 1357001. The sphagnum peat particles can be prepared for present use by any suitable method, e.g. milling or grinding; and preferably substantially 100% of the sphagnum peat particles before agglomeration have a particle size less than 1mm. We prefer that the peat particles used as the starting material in the process of the invention have a moisture content of from 100 to 250% by weight, based on the dry weight of the peat solids. If however the peat has been dried, e.g. for transport and/or storage, or if desired, free water, notably as the solvent phase for a salt component as described below, can be fed to the tumbling peat particles. Also the peat can be subjected to pre-treatment, e.g. ammoniation or treatment with an acid, before it is agglomerated.

Agglomeration to produce granules is achieved by agitating the peat particles in the presence of water and a calcium and/or magnesium salt which is caused to precipitate *in situ* during or after the agitation. The calcium and/or magnesium salts can be used in the form of suspensions or slurries of solid particles of the salt in water, as when a suspension of calcium sulphate is fed to a tumbling bed of peat particles. Suitable low solubility calcium or magnesium salts for present use include the sulphates, phosphates, carbonates, hydroxides and silicates. However, it may be necessary to use large amounts of water to dissolve adequate amounts of the low solubility salts to achieve a binding effect and this may impose unacceptable loads on the granule drying equipment. We have found that this problem can be overcome by forming the low solubility salts by the interaction of other salts to form a precipitate of the desired salt, e.g. as when calcium chloride and sodium sulphate react to form a precipitate in situ. Suitable soluble materials which react to form the low solubility salts in situ include the chlorides, nitrates, and the dihydrogen phosphate salts of calcium and/or magnesium; and the hydroxides, carbonates, sulphates, phosphates and/or silicates of sodium, potassium and/or ammonia or free mineral acids e.g. sulphuric or phosphoric acid. The materials which are to react to form the precipitates in situ are conveniently provided as solutions or suspensions in water. However, if desired the materials may be used in solid form, e.g. as powders; the moisture in the peat and/or a separate feed of free water supplying the necessary water to dissolve the materials in situ. In some cases the reaction between materials may take some time to go to completion, as when monocalcium phosphate, e.g. in the form of superphosphate, is reacted with calcium carbonate or ammonium sulphate to form the less soluble dicalcium phosphate or calcium sulphate respectively. Thus, precipitation of the less soluble calcium salt may occur not only during the agitation of the peat particles, but also at later stages in the process, e.g. during the drying of the granulated particles, and may be assisted by the increase in temperature during the drying process.

The calcium and/or magnesium salts are preferably used in such amounts as to provide a total of from 1 to 25 parts, and more preferably from 15 to 20 parts, by weight of precipitated salt expressed as CaO or MgO, per part by weight of dry peat solids.

The agitation of the peat particles to form agglomerates can be carried out in any suitable apparatus, e.g. in a rotating drum or pan granulator, or in a rotating inclined tubular granulator. Water and the necessary materials can be premixed with the feed of peat particles or can be fed, e.g. by means of sprayers, dribble bars or sparge pipes, to the tumbling bed of particles. If desired other ingredients, e.g. fertilizer salts, diluents (e.g. sand or vermiculite), pH adjusters (e.g. chalk or dolomite limestone), pesticides, fungicides, herbicides or pigments can also be included in the mixture formed in the granulation process.

Agitation of the peat particles is conveniently carried out at from ambient to $80^{o}C$, e.g. 15 to $50^{o}C$, and for such time as is required to form granules in the size range 0.5 to 5.0mm. The agitation can be carried out as a continuous process or in batches.

The agglomerated peat particles are desirably subjected to accelerated drying, e.g. in a forced air draught, in a hot air oven or on a moving perforated belt, to reduce the moisture content to below 60% based on the weight of dry peat solids, e.g. 5 to 20%. Preferably, drying is carried out at less than $120^{o}C$, e.g. at 50 to $80^{o}C$. Where agglomeration is carried out in an elongated tubular granulator, hot air can be blown through the tube countercurrent to the flow of particles to cause drying of the agglomerates as they are being formed.

The peat agglomerates of the invention find widespread use where a particulate inert carrier is required. Thus the agglomerates can be treated with a biocide, e.g. a pesticide or fungicide, after agglomeration, e.g. by the spraying of the biocide onto the surface of the agglomerates or by the solid particles of biocide being attached to the surface of the agglomerates with a suitable adhesive e.g. methyl cellulose, or can have such a biocide incorporated therein during manufacture.

The following examples are given to illustrate, but in no way limit, the present invention.

Example 1

Sedge peat (40 parts dry weight) was mixed with triple super phosphate (20 parts), hydrated calcium hydroxide (20 parts) and calcium carbonate (20 parts). The mixture was agitated in a dough mixer and 0.75 kg of water was added over a period of 2 minutes. Agitation was continued for a further 3 minutes. After agitation the mixture was allowed to stand for 10 minutes before being dried at a temperature of $80^{\circ}$C for a period of 90 minutes to reduce the water content to below 5% weight/weight. Particles in the size range 1 to 4 mm were removed by sieving.

Example 2

Sphagnum peat (25 parts dry weight) was mixed with triple super phosphate (40 parts), magnesium sulphate hepta hydrate (20 parts) and calcium carbonate (15 parts). The mixture was agitated in a dough mixer and 1.2 kg of water was added over a period of 3 minutes. Agitation was continued for a further 3 minutes. After agitation the mixture was allowed to stand for 10 minutes before being dried at a temperature of $80^{\circ}$C for a period of 90 minutes to reduce the water content to below 5% weight/weight. Particles in the size range 1 to 4 mm were removed by sieving.

What we claim is:-

1.   A composition comprising an agglomerate of peat particles containing as a binder for the particles a calcium and/or magnesium salt having a solubility of less than 1g per 100ml of water at 20$^{O}$C.

2.   A composition as claimed in Claim 1 wherein the peat particles are particles of sedge peat.

3.   A composition as claimed in Claim 1 wherein the peat particles are particles of sphagnum peat.

4.   A composition as claimed in Claim 3 wherein substantially 100% of the sphagnum peat particles before agglomeration have a diameter of less than 1mm.

5.   A composition as claimed in any one of the preceding Claims wherein the calcium and/or magnesium salt is a sulphate, phosphate, carbonate, hydroxide or silicate.

6.   A composition as claimed in any one of the preceding Claims in which the calcium and/or magnesium salt is present in a quantity of from 1 to 25 parts by weight of precipitated salt expressed as CaO or MgO per part of dry peat solids.

7.   A process for agglomerating peat particles which comprises agitating the peat particles in the presence of water and calcium and/or magnesium salts which are caused to precipitate in situ as a calcium and/or magnesium salt having a water solubility of less than 1g per 100ml of

0070057

water at 20°C.

8.    A process is claimed in Claim 7 wherein the salt is formed in situ by the interaction between two soluble materials.

9.    A process as claimed in Claim 8 wherein the two soluble materials are salts and are provided as solutions or suspensions of the salts in water.

10.   A composition as claimed in Claim 1 in which the peat particles are particles of sedge peat, the salt has a solubility of less than 0.4g per 100ml of water and in which the agglomerated peat particles are coated with a bioicide.